# EUROPÄISCHE PATENTSCHRIFT

(11) **EP 0 692 346 B1**
(45) Veröffentlichungstag und Bekanntmachung des Hinweises auf die Patenterteilung: **25.11.1998**
(21) Anmeldenummer: 95250170.8
(22) Anmeldetag: 12.07.1995
(51) Int. Cl.: B25H 1/00, B62H 3/00

(54) **Fahrradständer**
Bicycle stand
Support de bicyclette

(30) Priorität: 15.07.1994 DE 9412152 U
(43) Veröffentlichungstag der Anmeldung: 17.01.1996
(73) Patentinhaber: Tramac S.L., 03440 Ibi (Alicante) (ES); Ibek Rohr- und Metallverarbeitungs GmbH, 56414 Steinefrenz (DE)
(72) Erfinder: Fürbeth, Alfred, D-56132 Dausenau (DE); Nauarro, Antonio Berbegal, ES-03440 Ibi (Alicante) (ES)
(74) Vertreter: Ninnemann, Detlef, Dipl.-Ing.

(56) Entgegenhaltungen:
- EP-A- 0 597 150
- CH-A- 265 699
- GB-A- 2 125 329
- US-A- 4 531 712
- US-A- 4 662 617
- US-A- 4 953 318
- DATABASE WPI Week 9205 Derwent Publications Ltd., London, GB; AN 92-041300 & WO-A-92 00026 (COTA)

## Beschreibung

Die Erfindung betrifft einen Fahrradständer nach dem Oberbegriff des Anspruchs 1.

Es sind Fahrradständer für Reparartur- und Montagezwecke bekannt, bei denen das Fahrrad an unterschiedlichen Stellen des Rahmens oder der Räder abgestützt wird. Diese Fahrradständer sind sowohl in fester Ausführung als auch in zusammenklappbarer Ausführung bekannt. Das Zusammenklappen soll den Transport und die Lagerung des Fahrradständers erleichtern.

Die bisher bekannten zusammenklappbaren Fahrradständer weisen den Nachteil auf, daß Befestigungselemente, wie Schrauben zu lösen sind. Weiterhin besteht der Nachteil, daß die Fahrradständer auch in zusammengeklapptem Zustand noch platzaufwendig sind und daß Sie unhandlich und damit schlecht zu transportieren sind.

Ein Fahrradständer gemäß dem Oberbegriff des Anspruchs 1 ist aus EP-A-0 597 150 bekannt.

Der Erfindung liegt deshalb die Aufgabe zugrunde, einen bei Nichtgebrauch platzsparend lagerbaren und handlichen Fahrradständer zu schaffen.

Erfindungsgemäß wird das gemäß den kennzeichnenden Merkmalen des Anspruchs 1 erreicht.

Bei einem erfindungsgemäßen Fahrradständer, insbesondere Reparatur-und Arbeitsständer für Fahrräder mit mindestens einer Rahmenauflage für den Fahrradrahmen und mit Stützen für die Sicherung der Standfestigkeit des Fahrradständers bei Gebrauch, ist erfindungsgemäß ein Gehäuse vorgesehen, in dem Teile des Fahrradständers bei Nichtgebrauch versenkbar sind.

In einer ersten Ausführungsform ist ein rohrförmiges Gehäuse vorgesehen, an dessen einem Ende eine Aufnahme für die Tretlagernabe sowie Aufnahmen für mindestens einen in das Gehäuse in Arbeits- und in versenkter Stellung einsteckbaren Träger mit Rahmenauflage vorgesehen sind, während am anderen Ende des rohrförmigen Gehäuses die Stützen angeordnet sind, die aus einer gespreizten Stellung in eine zumindest annähernd paralle Stellung zueinander schwenkbar sind.

Die Stützen sind in der zumindest annähernd parallelen Stellung zueinander in das Gehäuse einschiebbar.

Die Aufnahme für die Tretlagernabe ist vorzugsweise in gegenüberliegenden Wandteilen des Gehäuses eingeformt, und das Gehäuse kann einen quadratischen, rechteckförmigen oder kreisförmigen Querschnitt aufweisen.

Das Gehäuse besteht zweckmäßig aus zwei Teilen, wobei die Trennlinie in Richtung der Längsachse des Gehäuses verläuft.

Als Träger für die Rahmenauflage kann ein Rohr vorgesehen sein, an dessen einem Ende die Rahmenauflage befestigt ist, dessen anderes Ende in das Gehäuse einschiebbar ist und das zweckmäßig einen quadratischen Querschnitt aufweist.

In einer vorteilhaften Ausführungsform sind als Aufnahme für den Träger der Rahmenauflage im Gehäuse zwei Anlageflächen vorgesehen, zwischen die der Träger einschiebbar ist. Dabei verlaufen die Anlageflächen zweckmäßig unter einem Winkel () von mehr als 90° gegenüber der Längsachse des Gehäuses, so daß der Träger in Arbeitsstellung des Fahrradständers schräg nach oben verläuft, d.h. wenn das Gehäuse in Arbeitsstellung mit seiner Längsachse in senkrechter Stellung ausgerichtet ist. Wenn die Tretlagernabe in der am oberen Teil des Gehäuses vorgesehenen Aufnahme liegt, wird das von der Nabe aus schräg nach oben zur Lenkersäule verlaufende Rohr des Fahrradrahmens durch die am Träger befestigte Rahmenauflage abgestützt.

Im Gehäuse ist weiterhin eine Anlagefläche einerseits für eine Stirnseite des Trägers in dessen Arbeitsstellung und andererseits für die Rahmenauflage des im Gehäuse versenkten Trägers vorgesehen. Mit dieser Anlagefläche wird in einfacher Weise die Endlage des Trägers in seiner Arbeitsstellung bestimmt. Wird andererseits der Träger zur raumsparenden Lagerung des Fahrradständers von oben in das Gehäuse versenkt, dient diese Fläche als Anschlag für die Rahmenauflage und fixiert den Träger im Gehäuse.

Um das Herausziehen des Trägers aus dem Gehäuse in Arbeitsstellung zu verhindern, ist es zweckmäßig, daß der Träger auf der an der oberen Anlagefläche anliegenden Seite einen in eine Öffnung dieser Anlagefläche eingreifenden Arretierungsstift aufweist. Durch das auf die Rahmenauflage wirkende Kraftmoment wird der Arretierstift in der Arbeitsstellung des Trägers zwangsläufig in die gegenüberliegende Öffnung gedrückt und dadurch arretiert. Wenn der Träger aus der Arbeitsstellung entfernt werden soll, wird er an der Rahmenauflage angehoben, so daß der Arretierungsstift nicht mehr in die Öffnung eingreift, und wird anschließend aus dem Gehäuse herausgezogen.

Eine vorteilhafte weitere Ausführungsform der Erfindung sieht vor, daß am Träger für die Rahmenauflage oder an der Rahmenauflage mindestens eine Vorrichtung zur Arretierung des Vorderrades vorgesehen ist, z. B. daß zwei an der Rahmenauflage schwenkbar und verschiebbar gelagerte Stäbe vorgesehen sind. Die Stäbe werden in eine solche Winkelstellung zum Fahrrad gedreht, daß das Vorderrad zwischen ihnen liegt und so dessen Querstellen verhindert wird, wenn es auf dem Fahrradständer keine Bodenberührung hat.

Die ausklappbaren Stützen am unteren Enden des Gehäuses verlaufen in ausgeklappter Stellung von ihrer Lagerstelle aus schräg vom Gehäuse weg, während sie in eingeklappter Stellung zumindest etwa parallel zur Längsachse des Gehäuses liegen. In ausgeklappter Stellung verleihen sie dem Gehäuse eine hohe Stand- und Kippfestigkeit.

Die Stützen sind zweckmäßig in einem innerhalb des Gehäuses angeordneten Befestigungsteil schwenkbar gelagert. Dabei kann das Befestigungsteil in Richtung der Längsachse des Gehäuses verschiebbar oder im Bereich des Bodens des Gehäuses fest angeordnet sein. Bei Anwendung eines verschiebbaren Befestigungsteils wird dieses durch die ausgeklappten Stützen in seiner unteren Stellung fixiert. Nach dem Einklappen der Stützen in eine etwa parallel zur Längsachse des Gehäuses verlaufende Stellung, kann das Befestigungsteil im Gehäuse nach oben verschoben werden, wobei die Stützen im Gehäuse versenkt werden. In seiner oberen Stellung wird das Befestigungsteil durch Rasten oder durch von außen durch das Gehäuse eingeführte Arretierungselemente gehalten.

Wird das Befestigungsteil fest angeordnet, dann verbleiben die Stützen in eingeklappter Stellung außerhalb des Gehäuses und werden z.B. durch Bänder mit Klettverschluß in ihrer Stellung fixiert.

In einer zweiten Ausführungsform ist vorgesehen, daß das Gehäuse zwei gelenkig miteinander verbundene Kastenteile aufweist, wobei von der Seite aus, an der die beiden Kastenteile miteinander verbunden sind, ein Träger für die Tretlagernabe in ein Kastenteil und ein Träger für die Rahmenauflage in das andere Kastenteil einschiebbar sind.

Weiterhin kann zur Erhöhung der Standsicherheit in Arbeitsstellung vorgesehen sein, daß in die Kastenteile auf der ihrer gelenkigen Verbindungsseite gegenüberliegenden Seite in die Kastenteile einschiebbare Stützen vorgesehen sind.

Bei dieser Ausführungsform wird der Kasten zur Erzielung der Arbeitsstellung geöffnet und mit seinen den Verbindungsseiten gegenüberliegenden Seiten aufgestellt. Dann werden die in den Kastenteilen versenkten Träger herausgezogen und durch Stifte arretiert. Zur Erhöhung der Standsicherheit können dann seitlich noch die Stützen herausgezogen werden.

Der erfindungsgemäße Fahrradständer wird zweckmäßig noch dadurch ergänzt, daß mindestens ein an das Gehäuse anklappbarer Werzeugträger vorgesehen ist und daß ein Teil des Werkzeugträgers als Griffelement ausgebildet ist. Mit Hilfe dieses Griffelementes kann der Fahrradständer getragen werden, nachdem die Werkzeugträger an das Gehäuse geklappt und dort arretiert wurden.

Für die Sicherung des Fahrrades auf dem Fahrradständer können zweckmäßig Bänder mit Klettverschlüssen vorgesehen sein.

Der Vorteil des erfindungsgemäßen Fahrradständers besteht darin, daß für den Transport und die Lagerung des Fahrradständers alle Teile in einem Gehäuse versenkbar sind, das eine längliche oder kofferähnliche Form aufweist und somit leicht verstaubar und leicht transportierbar ist, bzw. daß einzelne Teile so klappbar sind, daß sie sich in ihrer Gesamtheit der Gehäuseform anpassen. Das Aufstellen bzw. Zusammenlegen des Fahrradständers ist erheblich vereinfacht, da keine aufwendigen Schraubarbeiten erforderlich sind.

Die Erfindung soll in Ausführungsbeispielen anhand von Zeichnungen erläutert werden. Es zeigen:
- Fig. 1: einen Längsschnitt durch einen Fahrradständer mit rohrförmigem Gehäuse in Arbeitsstellung;
- Fig.1a: die Einzelheit A aus Fig. 1;
- Fig. 2: eine perspektivische Ansicht eines Befestigungsteils für Stützen;
- Fig. 3: einen Längssschnitt durch einen Fahrradständer gemäß Fig. 1 mit versenkten Baugruppen;
- Fig. 4: den Fahrradständer nach den Figuren 1 und 2 in einer gegenüber den dort dargestellten Längsschnitten um 90° gedrehten Ansicht;
- Fig. 5: eine Draufsicht auf den Fahrradständer nach den Figuren 1, 2 und 4;
- Fig. 6: ein Ausführungsbeispiel mit fest montiertem Befestigungsteil für die Stützen;
- Fig. 7: die Ausführungsform eines Fahrradständers mit einem kastenförmigen zweiteiligen Gehäuse.

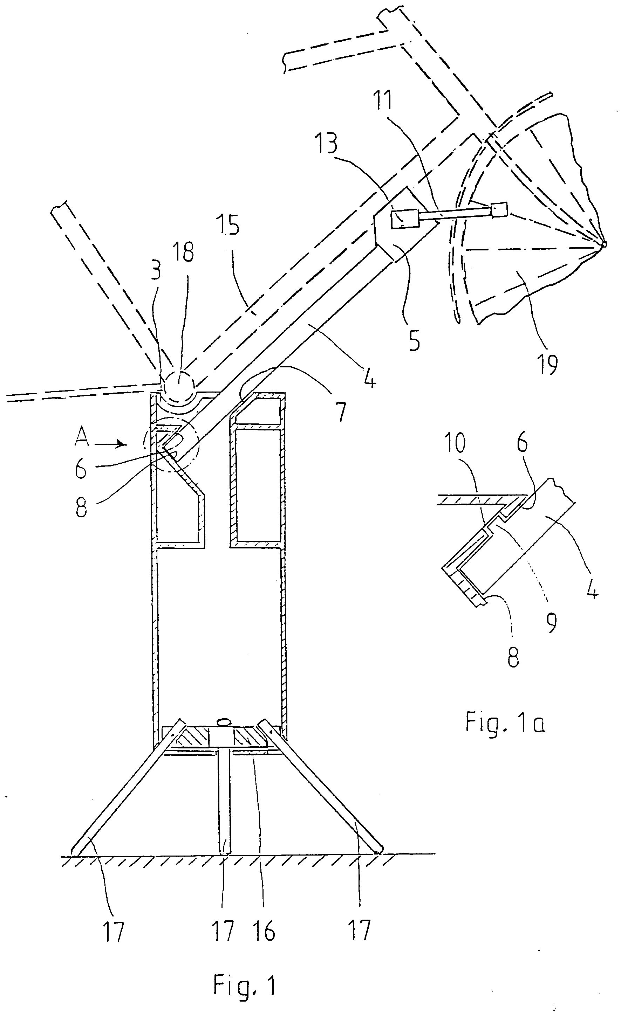

Der erfindungsgemäße Fahrradständer weist in einer Ausführungsform, wie sie in den Figuren 1 bis 5 dargestellt ist, ein Gehäuse aus zwei Teilen 1, 2 auf, die durch an sich bekannte Elemente, wie Schrauben oder Steckverschlüsse, miteinander verbindbar sind. Das in diesen Figuren dargestellte Gehäuse weist einen rechteckigen bzw in seinem unteren Teil einen quadratischen Querschnitt auf. Am oberen Ende ist in je einer Seitenwand des Gehäuses eine Aufnahme 3 für die Tretlagernabe 18 eines Fahrrades vorgesehen. Weiterhin ist dort eine Aufnahme für einen Träger 4 vorgesehen, an dem eine Rahmenauflage 5 für den Fahrradrahmen befestigt ist. Der Träger 4 besteht im vorliegenden Ausführungsbeispiel aus einem Vierkantrohr.

Die Aufnahme für die Fixierung des Endes des Trägers 4 im Gehäuse weist zwei Anlageflächen auf, die in unterschiedlichen Ebenen versetzt zueinander übereinanderliegen. So liegt die Ebene der Anlagefläche 6 über der Ebene der Anlagefläche 7. Zwischen beide Anlageflächen ist der Träger 4 in die Arbeitsstellung einschiebbar. Dabei liegt das Ende des Trägers 4 mit seiner Oberseite von unten an der Anlagefläche 6 an, während die Unterseite auf der Anlagefläche 7 liegt. Die Anlageflächen 6, 7 verlaufen parallel zueinander unter einem solchen Winkel, daß sich der Träger 4 von den Anlageflächen ausgehend schräg nach oben aus dem Gehäuse heraus erstreckt. Eine Stirnseite des Trägers 4 liegt dabei an einer weiteren Anlagefläche 8 an, die unter 90° zu den vorgenannten Anlageflächen verläuft.

Wie aus der Fig. 1a ersichtlich ist, weist der Träger 4 einen Arretierungsstift 9 auf, der in eine entsprechende Öffnung 10 in der Anlagefläche 6 eingreift. Dadurch wird das Herausziehen des Trägers 4 aus dem Gehäuse in seiner Arbeitsstellung verhindert. Zum Herausnehmen des Trägers 4 muß dieser lediglich an seinem anderen Ende angehoben werden, bis der Arretierungsstift 9 nicht mehr in die Öffnung 10 eingreift. Anschließend kann der Träger aus dem Gehäuse herausgezogen werden.

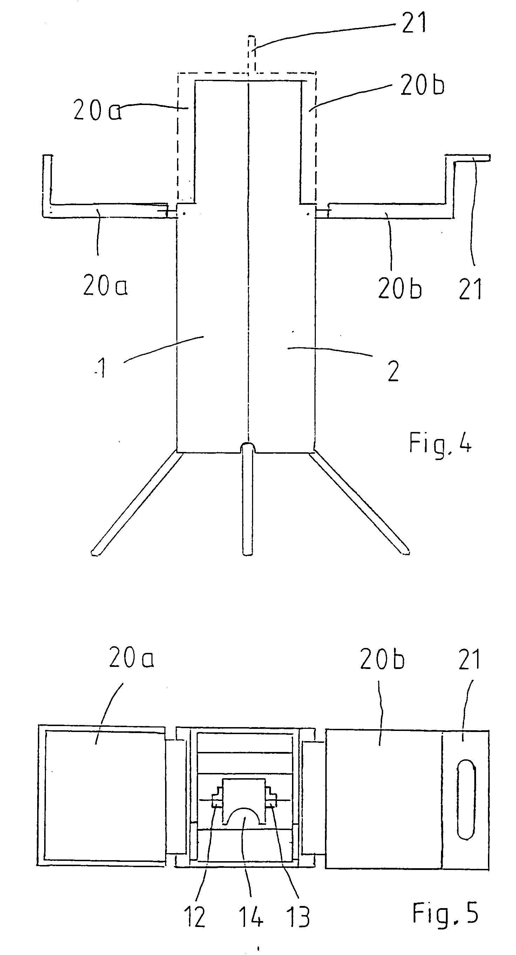

An seinem oberen Ende ist am Träger 4 die Rahmenauflage 5 angebracht. An dieser sind zu beiden Seiten Stäbe 11 als Radarretierung für das Vorderrad 19 eines Fahrrades angebracht. Diese Stäbe 11 sind in Halterungen 12, 13 verschiebbar und im Winkel gegenüber dem Träger 4 verstellbar gelagert. Die Rahmenauflage weist eine Mulde 14 (Fig. 5) für die Aufnahme des Fahrradrahmens 15 auf.

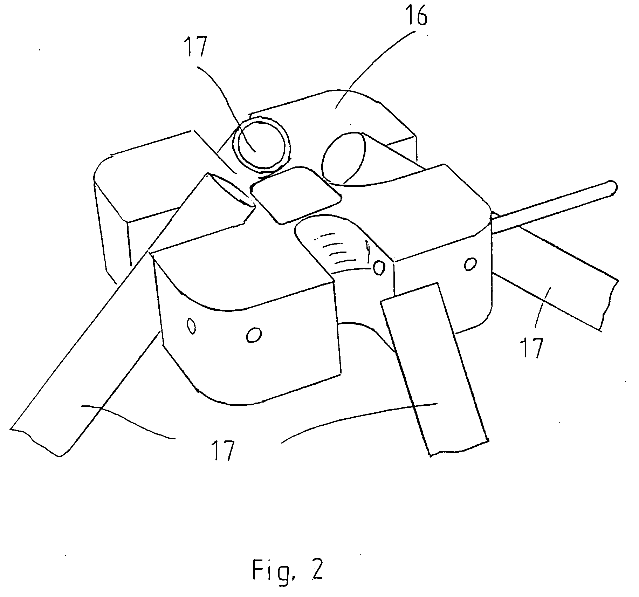

Am unteren Ende des rohrförmigen Gehäuses ist ein Befestigungsteil 16 für vier Stützen 17 vorgesehen, wie es insbesondere aus der Fig.2 ersichtlich ist. Die Stützen sind im Befestigungsteil 16 schwenkbar befestigt. In den Figuren 1 und 2 sind sie in einer ausgeklappten Stellung dargestellt, in der sie von den Lagerstellen im Befestigungsteil 16 schräg vom Gehäuse weg verlaufen. In dieser Stellung weist das Gehäuse einen sicheren Stand auf, in dem die Lagerung eines Fahrrades möglich ist.

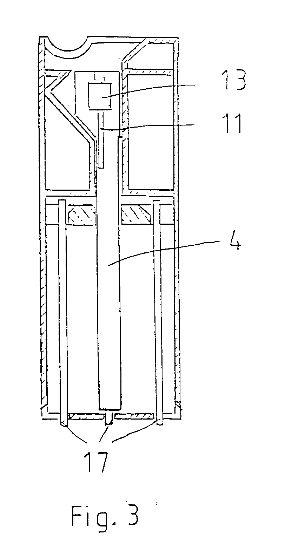

Das Befestigungsteil 16 ist in der Ausführungsform der Figuren 1 bis 5 verschiebbar angeordnet, so daß es bei angeklappten Stützen 17, d.h. wenn diese in etwa parallel zur Längsachse des Gehäuses verlaufen, aus der unteren Stellung der Fig. 1 in die obere Stellung der Fig. 3 verschoben werden kann. Das Verschieben erfolgt mittels der Stützen 17, die dabei im Gehäuse versenkt werden.

In der unteren Stellung erfolgt eine Arretierung des Befestigungsteils 16 durch die ausgeklappten Stützen 17. in der oberen Stellung kann die Arretierung z. B. durch nicht dargestellte Stifte erfolgen, die von außen durch das Gehäuse in entsprechende Öffnungen des Befestigungsteils 16 eingreifen.

Die in Fig. 1 dargestellte Stellung der Stützen 17 und des Trägers 4 erlaubt die Aufnahme eines Fahrrades an seiner Tretlagernabe und am Fahrradrahmen 15. Die Stäbe 11 verhindern dabei, daß sich das Vorderrad 19, das keine Bodenberührung hat, querstellt. Eine zusätzliche Befestigung des Fahrradrahmens an dem Fahrradständer kann z.B. mittels nicht dargestellter Bänder mit Klettverschluß erfolgen.

Aus den Figuren 4 und 5 ist erkennbar, das das Gehäuse an zwei Seiten klappbare Werkzeugträger 20a und 20b aufweist. Diese können an das Gehäuse herangeklappt werden und schließen dann, wie aus der gestrichelt dargestellten Stellung in Fig. 4 ersichtlich ist, bündig mit dem Gehäuse ab. In dieser Stellung werden die Werkzeugträger ineinander oder mit dem Gehäuse verrastet (nicht dargestellt). Der Werkzeugträger 20b weist ein Griffelement 21 auf, mit dessen Hilfe in der gestrichelt dargestellten Stellung der Werkzeugträger 20a, 20b der Fahrradständer getragen werden kann.

Aus der Fig. 3 ist ersichtlich, daß sowohl die Stützen 17 als auch der Träger 4 mit der Rahmenauflage 5 und den daran befestigten Halterungen 12, 13 und den Stäben 11 im Gehäuse versenkt sind, so daß eine platzsparende Lagerung und ein bequemer Transport möglich sind.

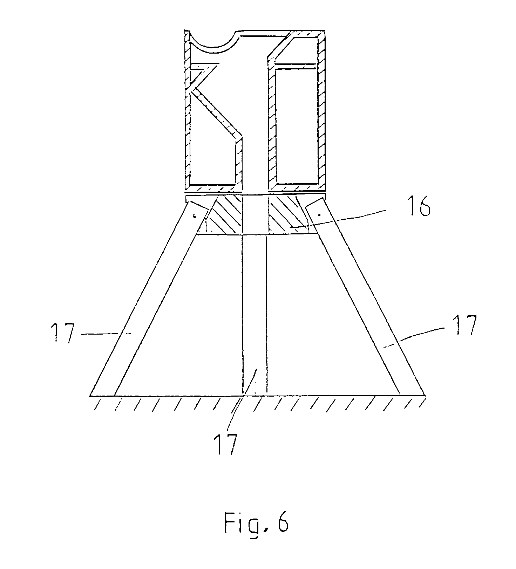

Bei dem Ausführungsbeispiel der Fig. 6 ist das Befestigungsteil 16 für die Stützen 17 am Boden des Gehäuses befestigt, d.h. es ist nicht verschiebbar. Das Gehäuse besteht in diesem Fall nur aus dem oberen Teil des in der Figur 1 dargestellten Gehäuses. Durch das Aneinanderklappen der Stützen wird auch in diesem Fall eine platzsparende Lagerung und ein bequemer Transport möglich.

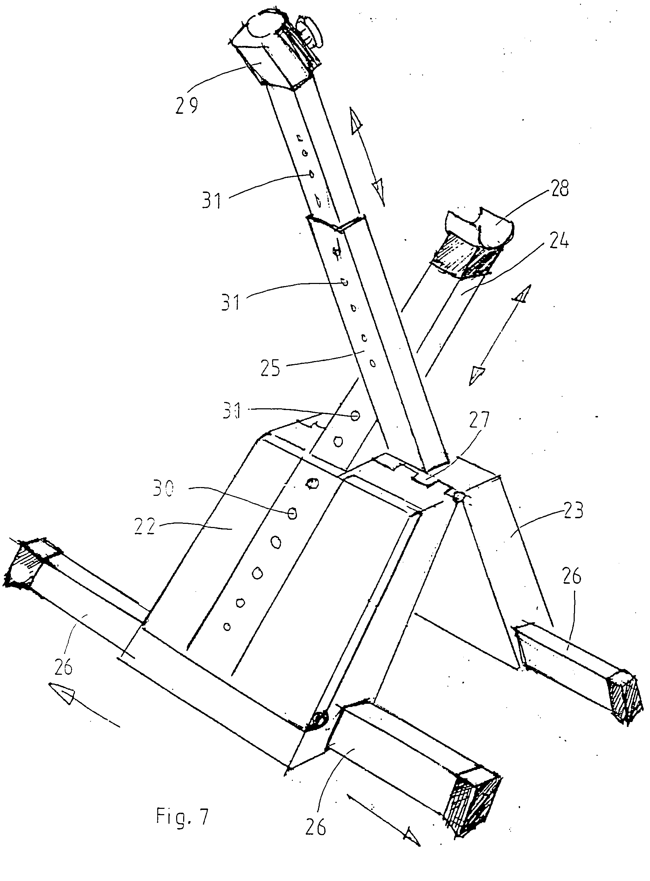

Die in der Fig. 7 dargestellte Ausführungsform weist einen Kasten auf, der aus zwei Teilen 22, 23 besteht. Diese sind durch ein Scharnier 27 miteinander verbunden. Von den durch das Scharnier 27 miteinander verbundenen Seiten des Kastens erstrecken sich ein Träger 24 für eine Auflage 28 der Tretlagernabe und ein Träger 25 für die Rahmenauflage 29 in die Kastenteile 22 bzw. 23. Die Träger 24 und 25 verlaufen so unter einem Winkel zueinander, daß die Auflage 28 für die Tretlagernabe und die Rahmenauflage 29 in etwa in einer senkrechten Ebene liegen.

Die Kastenteile 22 und 23 weisen Löcher 30 auf, denen Löcher 31 in den Trägern 24, 25 zugeordnet sind. Mit Hilfe von nicht dargestellten Splinten können unter Nutzung dieser Löcher die Träger 24, 25 in unterschiedlichen Höhen fixiert werden.

Die Kastenteile 22, 23 weisen vier Stützen 26 auf, von denen in Fig. 7 nur drei sichtbar sind. Diese sind seitlich aus den Kastenteilen 22, 23 herausziehbar und erhöhen die Standsicherheit des Fahrradständers.

Auch bei dieser Ausführungsform sind sämtliche Träger und Stützen in den Kastenteilen versenkbar. Nach dem Zusammenklappen der Kastenteile ist ein Behältnis ähnlich einem Koffer vorhanden, das leicht lager- und transportierbar ist.

## Patentansprüche

1. Fahrradständer, insbesondere Reparatur- und Arbeitsständer für Fahrräder mit mindestens einer Rahmenauflage (5,28,29) für den Fahrradrahmen und mit Stützen (17,26) für die Sicherung der Standfestigkeit des Fahrradständers bei Gebrauch,
**dadurch gekennzeichnet,**
daß ein Gehäuse (1, 2; 22, 23) vorgesehen ist, in dem Teile des Fahrradständers bei Nichtgebrauch versenkbar sind.

2. Fahrradständer nach Anspruch 1, **dadurch gekennzeichnet,** daß ein rohrförmiges Gehäuse (1, 2) vorgesehen ist, an dessen einem Ende eine Aufnahme (3) für die Tretlagernabe (18) sowie Aufnahmen für mindestens einen in das Gehäuse (1, 2) in Arbeits- und in versenkter Stellung einsteckbaren Träger (4) mit Rahmenauflage (5) vorgesehen sind, während am anderen Ende des rohrförmigen Gehäuses die Stützen (17) angeordnet sind, die aus einer gespreizten Stellung in eine zumindest annähernd paralle Stellung zueinander schwenkbar sind.

3. Fahrradständer nach Anspruch 1 oder 2, **dadurch gekennzeichnet,** daß die Stützen (17) in der zumindest annähernd parallelen Stellung zueinander in das Gehäuse einschiebbar sind.

4. Fahrradständer nach mindestens einem der vorherigen Ansprüche, **dadurch gekennzeichnet,** daß die Aufnahme (3) für die Tretlagernabe (18) in gegenüberliegenden Wandteilen des Gehäuses eingeformt ist.

5. Fahrradständer nach mindestens einem der vorhergehenden Ansprüche, **dadurch gekennzeichnet,** daß das Gehäuse einen quadratischen, rechteckförmigen oder kreisförmigen Querschnitt aufweist.

6. Fahrradständer nach mindestens einem der vorhergehenden Ansprüche, **dadurch gekennzeichnet,** daß das Gehäuse aus zwei Teilen (1, 2) besteht, wobei die Trennlinie in Richtung der Längsachse des Gehäuses verläuft.

7. Fahrradständer nach mindestens einem der vorhergehenden Abnsprüche, **dadurch gekennzeichnet,** daß als Träger (4) für die Rahmenauflage (5) ein Rohr vorgesehen ist, an dessen einem Ende die Rahmenauflage (5) befestigt ist und dessen anderes Ende in das Gehäuse (1, 2) einschiebbar ist.

8. Fahrradständer nach Anspruch 7, **dadurch gekennzeichnet,** daß das Rohr einen quadratischen Querschnitt aufweist.

9. Fahrradständer nach mindestens einem der vorhergehenden Ansprüche, **dadurch gekennzeichnet**, daß als Aufnahme für den Träger (4) der Rahmenauflage (5) im Gehäuse (1, 2) zwei Anlageflächen (6, 7) vorgesehen sind, zwischen die der Träger (4) einschiebbar ist.

10. Fahrradständer nach Anspruch 9, **dadurch gekennzeichnet,** daß die Anlageflächen (6, 7) unter einem Winkel () von mehr als 90° gegenüber der Längsachse des Gehäuses (1, 2) verlaufen.

11. Fahrradständer nach mindestens einem der vorhergehenden Ansprüche, **dadurch gekennzeichnet,** daß im Gehäuse (1, 2) eine Anlagefläche (8) einerseits für ein Ende des Trägers (4) in dessen Arbeitsstellung und andererseits für die Rahmenauflage (5) des im Gehäuse (1, 2) versenkten Trägers (4) vorgesehen ist.

12. Fahrradständer nach mindestens einem der vorhergehenden Ansprüche, **dadurch gekennzeichnet,** daß der Träger (4) auf der an der oberen Anlagefläche (6) anliegenden Seite einen in eine Öffnung (10) dieser Anlagefläche (6) eingreifenden Arretierungsstift (9) aufweist.

13. Fahrradständer nach mindestens einem der vorhergehenden Ansprüche, **dadurch gekennzeichnet,** daß am Träger (4) für die Rahmenauflage (5) oder an der Rahmenauflage (5) mindestens eine Vorrichtung zur Arretierung des Vorderrades (19) vorgesehen ist.

14. Fahrradständer nach Anspruch 13, **dadurch gekennzeichnet,** daß als Arretierung zwei an der Rahmenauflage (5) schwenkbar und verschiebbar gelagerte Stäbe (11) vorgesehen sind.

15. Fahrradständer nach mindestens einem der vorhergehenden Ansprüche, **dadurch gekennzeichnet,** daß die ausklappbaren Stützen (17) in einem innerhalb des Gehäuses (1, 2) angeordneten Befestigungsteil (16) schwenkbar gelagert sind.

16. Fahrradständer nach Anspruch 15, **dadurch gekennzeichnet,** daß das Befestigungsteil (16) in Richtung der Längsachse des Gehäuses (1, 2) verschiebbar ist.

17. Fahrradständer nach Anspruch 16, **dadurch gekennzeichnet,** daß das Befestigungsteil (16) im Bereich des Bodens des Gehäuses fest angeordnet ist.

18. Fahrradständer nach Anspruch 1, **dadurch gekennzeichnet,** daß das Gehäuse zwei gelenkig miteinander verbundene Kastenteile (22, 23) aufweist, wobei von der Seite aus, an der die beiden Kastenteile (22, 23) miteinander verbunden sind, ein Träger (24) für eine Auflage (28) der Tretlagernabe in ein Kastenteil (22) und ein Träger (25) für die Rahmenauflage (29) in das andere Kastenteil (23) einschiebbar angeordnet sind.

19. Fahrradständer nach Anspruch 18, **dadurch gekennzeichnet,** daß an den Kastenteilen (22, 23) auf der ihrer gelenkigen Verbindungsseite gegenüberliegenden Seite in die Kastenteile (22, 23) einschiebbare Stützen (26) vorgesehen sind.

20. Fahrradständer nach mindestens einem der vorhergehenden Ansprüche, **dadurch gekennzeichnet,** daß mindestens ein an das Gehäuse anklappbarer Werkzeugträger (20a, 20b) vorgesehen ist.

21. Fahrradständer nach Anspruch 20, **dadurch gekennzeichnet,** daß ein Teil des Werkzeugträgers (20b) als Griffelement (21) ausgebildet ist.

22. Fahrradständer nach mindestens einem der vorhergehenden Ansprüche, **dadurch gekennzeichnet,** daß für die Sicherung des Fahrrades auf dem Fahrradständer Bänder mit Klettverschlüssen vorgesehen sind.

## Claims

1. Bicycle stand, especially repair and work stand for bicycles with at least one frame rest (5, 28, 29) for the bicycle frame and with supports (17, 26) for ensuring the stability of the bicycle stand in use,
characterised in that
a housing (1, 2; 22, 23) is provided into which parts of the bicycle stand can be stowed when out of use.

2. Bicycle stand according to claim 1, characterised in that a tubular housing (1, 2) is provided at one end of which there is a receptacle (3) for the pedal bearing hub (18) as well as receptacles for at least one carrier (4) with frame rest (5) insertable in the housing in the working and in the stowed position, whilst at the other end of the tubular housing the supports (17) are arranged which are swingable from a spread position to a position in which they are at least approximately parallel to one another.

3. Bicycle stand according to claims 1 or 2, characterised in that the supports (17) can be slid into the housing in the position in which they are at least approximately parallel to one another.

4. Bicycle stand according to one of the preceding claims, characterised in that the receptacle (3) for the pedal bearing hub (18) is formed in opposing wall parts of the housing.

5. Bicycle stand according to one of the preceding claims, characterised in that the housing has a square, rectangular or circular cross section.

6. Bicycle stand according to one of the preceding claims, characterised in that the housing consists of two parts (1, 2) and the separation line extends in the direction of the longitudinal axis of the housing.

7. Bicycle stand according to one of the preceding claims, characterised in that a tube is provided as carrier (4) for the frame rest (5), at one end of which tube a frame rest (5) is secured and the other end of which is slidable into the housing (1, 2).

8. Bicycle stand according to claim 7, characterised in that the tube has a square cross section.

9. Bicycle stand according to one of the preceding claims, characterised in that two support surfaces (6, 7) are provided as sockets for the carrier (4) of the frame rest (5) in the housing (1, 2), between which support surfaces the carrier (4) is slidable.

10. Bicycle stand according to claim 9, characterised in that the support surfaces (6, 7) make an angle () of more than 90° relative to the longitudinal axis of the housing (1, 2).

11. Bicycle stand according to at least one of the preceding claims, characterised in that a support surface (8) is provided in the housing (1, 2) on the one hand for one end of the carrier (4) in its operative position and on the other hand for the frame rest (5) of the carrier stowable in the housing (1, 2).

12. Bicycle stand according to at least one of the preceding claims, characterised in that the carrier (4) has a stop pin (9) on the side facing the upper support surface (6) which can engage in an opening (10) of this support surface (6).

13. Bicycle stand according to at least one of the preceding claims, characterised in that at least one device for arresting the front wheel (19) is provided on the carrier (4) for the frame rest (5) or on the frame rest (5).

14. Bicycle stand according to claim 13, characterised in that two swingable and slidably mounted rods (11) are provided on the frame rest (5) as arrestors.

15. Bicycle stand according to at least one of the preceding claims, characterised in that the foldable supports (17) are pivotably mounted in a fastening part (16) arranged within the housing (1, 2).

16. Bicycle stand according to claim 15, characterised in that the fastening part (16) is slidable in the direction of the longitudinal axis of the housing (1, 2).

17. Bicycle stand according to claim 16, characterised in that the fastening part (16) is fixed in the region of the base of the housing.

18. Bicycle stand according to claim 1, characterised in that the housing has two box parts (22, 23) connected to one another by hinges, wherein from the faces on which the two box parts (22, 23) are connected with one another, a carrier (24) for a support bracket (28) of the pedal bearing hub is slidably arranged in one box part (22) and a carrier (25) for the frame rest (29) is slidably arranged in the other box part (23).

19. Bicycle stand according to claim 18, characterised in that slidable supports (26) are provided on the box parts (22, 23) on the face remote from the face with the hinged connections.

20. Bicycle stand according to at least one of the preceding claims, characterised in that at least one foldable tool carrier (20a, 20b) is provided on the housing.

21. Bicycle stand according to claim 20, characterised in that a part of the tool carrier (20b) is formed as a hand grip (21).

22. Bicycle stand according to at least one of the preceding claims, characterised in that strips with touch and close fasteners are provided for securing the bicycle to the bicycle stand.

## Revendications

1. Dispositif de support pour bicyclette, notamment dispositif de support pour réparation et de travail pour bicyclettes, comportant au moins un appui (5, 28, 29) pour le cadre de la bicyclette et des montants (17, 26) servant & assurer la stabilité du support pour bicyclette lors de son utilisation,
caractérisé en ce
qu'il est prévu un boîtier (1, 2 ; 22, 23) dans lequel des parties du dispositif de support pour bicyclette peuvent être placées en renfoncement en cas de non utilisation.

2. Dispositif de support pour bicyclette selon la revendication 1, caractérisé en ce qu'il est prévu un boîter de forme tubulaire (1, 2), dans une extrémité duquel est prévu un logement (3) pour le moyeu (18) du pédalier ainsi que des logements pour au moins un support (4), qui peut être enfiché dans le boîtier (1, 2) dans la position de travail et dans une position en renfoncement et comporte un appui (5) pour le cadre, tandis que sur l'autre extrémité du boitier de forme tubulaire sont disposés des montants (17), qui peuvent pivoter l'un par rapport à l'autre depuis une position écartée dans une position, dans laquelle ils sont approximativement parallèles.

3. Dispositif de support pour bicyclette selon la revendication 2, caractérisé en ce que les montants (17) peuvent être insérés dans le boîtier, dans une position dans laquelle ils sont au moins approximativement parallèles entre eux.

4. Dispositif de support pour bicyclette selon au moins l'une des revendications précédentes, caractérisé en ce que le logement (3) pour le moyeu (18) du pédalier est formé dans des éléments de paroi opposés du boîtier.

5. Dispositif de support pour bicyclette selon au moins l'une des revendications précédentes, caractérisé en ce que le boîtier possède une section transversale carrée, rectangulaire ou circulaire.

6. Dispositif de support pour bicyclette selon au moins l'une des revendications précédentes, caractérisé en ce que le boîtier est formé de deux parties (1, 2), la ligne de séparation s'étendant dans la direction de l'axe longitudinal du boîtier.

7. Dispositif de support pour bicyclette selon au moins l'une des revendications précédentes, caractérisé en ce qu'il est prévu en tant que support (4) pour l'appui (5) pour le cadre un tube, à une extrémité duquel est fixé l'appui (5) pour le cadre et dont l'autre extrémité peut être insérée dans le boitier (1, 2).

8. Dispositif de support pour bicyclette selon la revendication 7, caractérisé en ce que le tube possède une section transversale carrée.

9. Dispositif de support pour bicyclette selon au moins l'une des revendications précédentes, caractérisé en ce qu'il prévu comme logement pour le support (4) de l'appui (5) pour le cadre dans le boitier (1, 2), deux surfaces d'application (6, 7), entre lesquelles le support (4) peut être inséré.

10. Dispositif de support pour bicyclette selon la revendication 9, caractérisé en ce que les surfaces d'application (6, 7) font un angle ( ) de plus de 90° par rapport à l'axe longitudinal du boîtier (1, 2).

11. Dispositif de support pour bicyclette selon au moins l'une des revendications précédentes, caractérisé en ce que dans le boîter (1, 2) une surface d'application (8) est prévue d'une part pour une extrémité du support (4) dans sa position de travail et d'autre part pour l'appui (5) pour le cadre, du support (4) placé en renfoncement dans le boîter (1, 2).

12. Dispositif de support pour bicyclette selon au moins l'une des revendications précédentes, caractérisé en ce que le support (4) possède, sur le côté appliqué contre la surface supérieure d'application (6), une tige de blocage (9) qui s'engage dans une ouverture (10) de cette surface d'application (6).

13. Dispositif de support pour bicyclette selon au moins l'une des revendications précédentes, caractérisé en ce qu'il est prévu au moins un dispositif pour bloquer la roue avant (19) sur le support (4) pour l'appui (5) pour le cadre ou sur l'appui (5) pour le cadre.

14. Dispositif de support pour bicyclette selon la revendication 13, caractérisé en ce qu'il est prévu comme dispositif de blocage, deux barres (11), qui sont montées de manière à pouvoir pivoter et à être translatables sur l'appui (5) pour le cadre.

15. Dispositif de support pour bicyclette selon au moins l'une des revendications précédentes, caractérisé en ce que les montants (17) pouvant être déployés par rabattement sont montés de manière à pouvoir pivoter dans une partie de fixation (16) disposée à l'intérieur du boîtier (1, 2).

16. Dispositif de support pour bicyclette selon la revendication 15, caractérisé en ce que la partie de fixation (16) est translatable dans la direction de l'axe longitudinal du boitier (1, 2).

17. Dispositif de support pour bicyclette selon la revendication 16, caractérisé en ce que la partie de fixation (16) est disposée de façon fixe au voisinage du fond du boîtier.

18. Dispositif de support pour bicyclette selon la revendication 1, caractérisé en ce que le boîtier comporte deux parties en forme de boîtes (22, 23), qui sont reliées entre elles de façon articulée, et un support (24) pour un appui (28) du moyeu du pédalier est disposé sur le côté sur lequel les deux parties en forme de dites (22, 23) sont reliées entre elles, de manière à pouvoir être inséré dans une partie en forme de boîte (22) et un support (25) pour l'appui (29) pour le cadre est disposé de manière à pouvoir être transféré dans l'autre partie en forme de boîte (23).

19. Dispositif de support pour bicyclette selon la revendication 18, caractérisé en ce que des montants (26) pouvant être insérés dans les parties en forme de boîtes (22, 23) sont prévus sur ces parties en forme de boîtes (22, 23), sur le côté tourné à l'opposé du côté de leur côté de liaison articulé.

20. Dispositif de support pour bicyclette selon au moins l'une des revendications précédentes, caractérisé en ce qu'il est prévu au moins un porte-outil (20a, 20b) pouvant être rabattu sur le boîtier.

21. Dispositif de support pour bicyclette selon la revendication 20, caractérisé en ce qu'une partie du porte-outil (20b) est agencée sous la forme d'un élément de préhension (21).

22. Dispositif de support pour bicyclette selon au moins l'une des revendications précédentes, caractérisé en ce que des sangles comportant des dispositifs de fermeture auto-aggripants sont prévues pour la fixation de la bicyclette.
